# EUROPEAN PATENT APPLICATION

(11) **EP 4 772 364 A1**
(43) Date of publication of application: **08.07.2026**
(21) Application number: 24859919.3
(22) Date of filing: 29.08.2024
(51) Int. Cl.: B60J 3/04, B60J 3/02, C03C 27/12, G02B 27/01, G02F 1/13, G02F 1/15, G02F 1/17, G02F 1/167, G02F 1/1334

(54) **SUN VISOR, INFORMATION DISPLAY DEVICE, AND VEHICLE**

(30) Priority: 01.09.2023 JP 2023142508
(71) Applicant: Sekisui Chemical Co., Ltd., Osaka-shi, Osaka 530-8565 (JP)
(72) Inventor: YANAI, Masashi, 6041LE Roermond (NL); IZU, Yasuyuki, Mishima-gun, Osaka 618-0021 (JP)
(74) Representative: Ter Meer Steinmeister & Partner
(86) International application number: PCT/JP2024/031017
(87) International publication number: WO 2025/047892

(57) **Abstract**

A sun visor (20) of the present invention is a sun visor for a vehicle and inclu des a light control film. An information display device of the present invention inclu des the sun visor (20) of the present invention and a light source that irradiates the s un visor (20) hanging down with light. A vehicle (1) of the present invention includ es the sun visor (20) of the present invention. According to the present invention, it is possible to provide a sun visor that enhances visibility when in use and reduces th e effect on the aesthetic quality of the in-vehicle space when not in use, and an infor mation display device and a vehicle each including the sun visor. interlayer film

## Description

### Technical Field

The present invention relates to a sun visor, and an information display device and a vehicle each including the sun visor.

### Background Art

Conventionally, vehicles are provided with sun visors above a windshield to protect the eyes of a driver and others from the direct rays of the sun (see, for example, PTL1).

### Citation List

### Patent Literature

PTL1: JP 07-285336 A

### Summary of Invention

### Technical Problem

However, when the conventional sun visor is caused to droop so as to cover the windshield, the sun visor blocks the upper field of view and visibility is sacrificed, resulting in a trouble such as invisibility of traffic signals and the like. In addition, the sun visor stands out when not in use, causing a problem of the adverse effect on an aesthetic quality of the in-vehicle space.

The present invention has been made in view of the above problems, and an object thereof is to provide a sun visor that enhances visibility when in use and reduces the effect on the aesthetic quality of the in-vehicle space when not in use, and also to provide an information display device and a vehicle each including the sun visor.

### Solution to Problem

As a result of earnest investigation, the inventors of the present invention have found that providing a light control film in the sun visor can solve the above problems and have completed the present invention as follows.
[1] A sun visor for a vehicle, the sun visor including a light control film.
[2] The sun visor according to [1] above, including a first glass plate, a second glass plate, and an interlayer disposed between the first glass plate and the second glass plate, wherein the interlayer includes the light control film.
[3] The sun visor according to [1] or [2] above, wherein the light control film includes a first light control film that is switchable between a light transmission mode and a light scattering mode and a second light control film whose visible light transmittance is adjustable, and the first light control film and the second light control film are arranged in a thickness direction.
[4] The sun visor according to [3] above, wherein, in the light transmission mode, the first light control film has a visible light transmittance of 60% or more and 100% or less and a haze value of 0% or more and 30% or less.
[5] The sun visor according to [3] or [4] above, wherein, in the light scattering mode, the first light control film has a visible light transmittance of 0% or more and 40% or less and a haze value of 70% or more and 100% or less.
[6] The sun visor according to any one of [3] to [5] above, wherein the second light control film is switchable between the light transmission mode and a light shielding mode, and, in the light transmission mode, the second light control film has a visible light transmittance of 25% or more and 100% or less and a haze value of 0% or more and 30% or less.
[7] The sun visor according to any one of [3] to [6] above, wherein the second light control film is switchable between the light transmission mode and a light shielding mode, and, in the light shielding mode, the second light control film has a visible light transmittance of 0.5% or more and less than 25% and a haze value of less than 60%.
[8] The sun visor according to any one of [1] to [7] above, wherein the sun visor is provided in a roof part of the vehicle and is capable of hanging down.
[9] An information display device including the sun visor according to [8] above and a light source that irradiates the sun visor hanging down with light.
[10] A vehicle including the sun visor according to any one of [1] to [9] above.
[11] The vehicle according to [10] above, including a roof part having a laminated glass structure, wherein the laminated glass structure includes a first glass plate, a second glass plate, and an interlayer disposed between the first glass plate and the second glass plate, and the sun visor is attached to the laminated glass structure.

### Advantageous Effects of Invention

According to the present invention, it is possible to provide a sun visor that enhances visibility when in use and reduces the effect on the aesthetic quality of the in-vehicle space when not in use, and an information display device and a vehicle each including the sun visor.

### Brief Description of Drawings

[Fig. 1] Fig. 1 is a diagram showing a vehicle including a sun visor in a state being provided in a roof part according to one embodiment of the present invention.
[Fig. 2] Fig. 2 is a diagram showing the vehicle including the sun visor in a state of hanging down according to one embodiment of the present invention.
[Figs. 3] Figs. 3 are diagrams for showing one example of how the sun visor hangs down according to one embodiment of the present invention.
[Figs. 4] Figs. 4 are diagrams for showing one example of how the sun visor hangs down according to one embodiment of the present invention.
[Fig. 5] Fig. 5 is a cross-sectional view of the sun visor according to one embodiment of the present invention.
[Fig. 6] Fig. 6 is a cross-sectional view of a modification of the sun visor according to one embodiment of the present invention.
[Fig. 7] Fig. 7 is a diagram for explaining the configuration of an information display device according to one embodiment of the present invention.
[Fig. 8] Fig. 8 is a diagram showing one example of information displayed on the sun visor according to one embodiment of the present invention.
[Fig. 9] Fig. 9 is a diagram showing one example of information displayed on the sun visor according to one embodiment of the present invention.
[Fig. 10] Fig. 10 is a block diagram showing a control system of the information display device according to one embodiment of the present invention.
[Fig. 11] Fig. 11 is an exploded view of a laminated glass structure in a vehicle according to one embodiment of the present invention.
[Fig. 12] Fig. 12 is a diagram showing one example of an overhead console provided in the vehicle according to one embodiment of the present invention.

### Description of Embodiments

### [Sun visor]

Hereinafter, a sun visor according to one embodiment of the present invention is described with reference to the drawings.

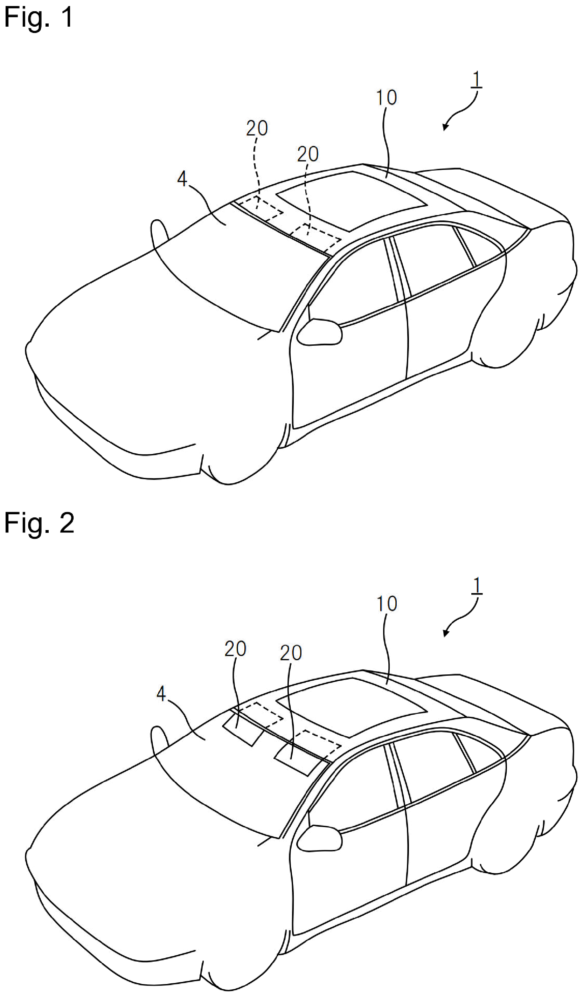

Fig. 1 is a diagram showing a vehicle including the sun visor according to one embodiment of the present invention. As shown in Fig. 1, a sun visor 20 according to one embodiment of the present invention is provided in a roof part 10 of a vehicle 1.

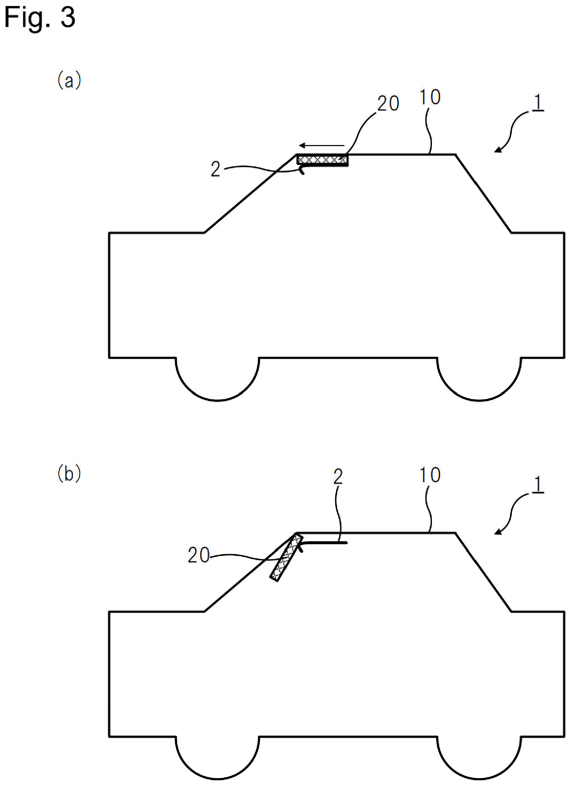

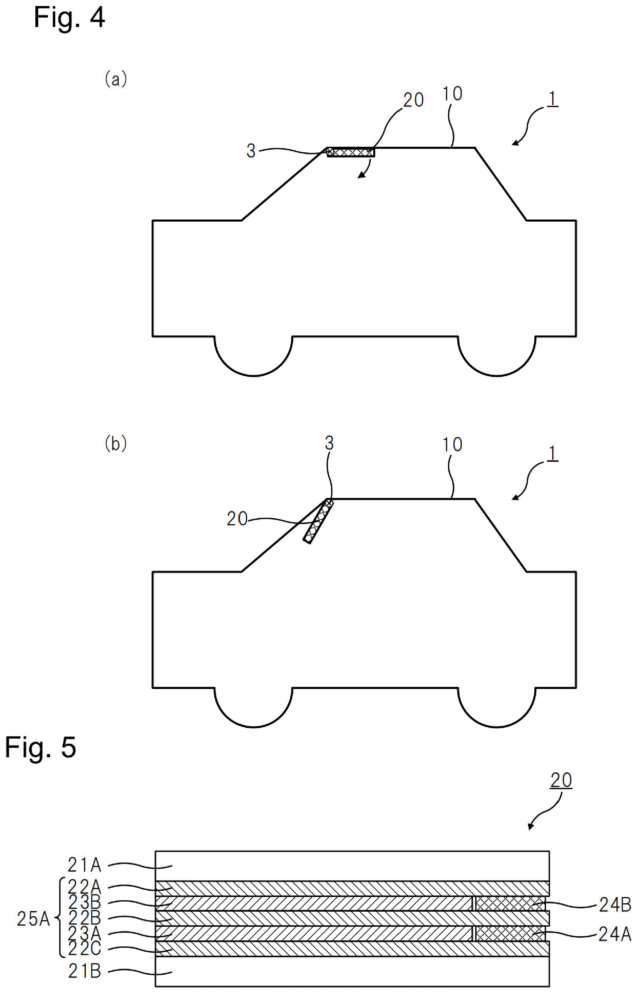

As shown in Fig. 2, the sun visor 20 according to one embodiment of the present invention can hang down, and hanging down allows the sun visor 20 to be disposed at a position to cover the upper portion of a windshield 4. For example, as shown in Figs. 3, the sun visor 20 may be caused to droop down by being moved along a guide 2. Furthermore, as shown in Figs. 4, the sun visor 20 may be caused to droop down by being rotated about a hinge 3. The sun visor 20 caused to hang down can be flipped up to thereby be disposed at a position along the roof part 10.

In the present invention, the sun visor 20 includes a light control film. Including the light control film enables the sun visor 20 to adjust a visible light transmittance thereof. That is, the sun visor 20 has at least a light transmission property when the light control film is in a light transmission mode to make the outside visible through the sun visor 20. As a result, even when the sun visor 20 is in a state of hanging down as it is despite not being required, it is possible to prevent the sun visor 20 from obstructing the field of view. Furthermore, in the light transmission mode, the sun visor 20 becomes transparent or translucent, which reduces the effect on the aesthetic quality of the in-vehicle space even if the sun visor 20 is left hanging down when not required.

In addition, according to the user's needs, the sun visor 20 can be flipped up to be disposed along the roof part 10. Therefore, it is possible to reduce the effect of the sun visor 20 on the aesthetic quality of the in-vehicle space when the sun visor 20 is not in use.

In the sun visor 20, only one light control film may be provided, or two or more light control films may be provided. In a case where two or more light control films are provided, it is preferable that the light control films be arranged along the thickness direction of the sun visor 20.

Arranging two or more light control films in the thickness direction and appropriately switching the modes of each light control film make it possible to adjust the visible light transmittance and haze value of the sun visor to wide variations, to thereby provide the sun visor which better meets the user's needs.

In the sun visor 20, the light control film in a light transmission mode may have a visible light transmittance of 10% or more, preferably 20% or more, and more preferably 30% or more. With the visible light transmittance set to a certain value or more, the sun visor 20 can enhance visibility when not required while reducing the effect on the aesthetic quality of the in-vehicle space.

In a case where a plurality of light control films are arranged in the thickness direction, the light transmission mode here refers to a visible light transmittance when all the light control films are in the light transmission mode. The visible light transmittance described above is not particularly limited in terms of the upper limit, and may be 100% or less, and is usually 90% or less and preferably 80% or less.

In the sun visor 20, the visible light transmittance when the light control film is in a light shielding mode is preferably 5% or less, more preferably 3% or less, even more preferably 1% or less, and particularly preferably 0.5% or less. By reducing the visible light transmittance in the light shielding mode, the sun visor 20 becomes generally opaque and can exhibit sufficient light shielding and heat shielding properties, making it possible to prevent the driver from being directly irradiated with sunlight.

In a case where a plurality of light control films are arranged in the thickness direction, the light shielding mode here refers to a visible light transmittance when all the light control films are in the light shielding mode. The visible light transmittance in the case of the light shielding mode is not particularly limited in terms of the lower limit and may be 0% or more.

Note that the visible light transmittance may be measured using a spectrophotometer in accordance with JIS R3106: 2019.

Hereinafter, as one embodiment of the sun visor, a sun visor in which two light control films are provided in the thickness direction is described in detail.

As shown in Fig. 5, the sun visor 20 according to one embodiment of the present invention includes two light control films 23A and 23B. Fig. 5 is a cross-sectional view of the sun visor 20 according to one embodiment of the present invention. This configuration makes it possible, with the sun visor 20 drooping down, to sufficiently suppress glare of outside light such as sunlight and to ensure visibility of the outside world when there is no glare of the outside light. In addition, as shown in Fig. 5, the sun visor 20 according to one embodiment of the present invention may further include semiconductor drive boards 24A and 24B for driving the light control films 23A and 23B, respectively. The sun visor 20 can eliminate, by having the semiconductor drive boards 24A and 24B, the need to provide a circuit for driving the light control films to portions other than the sun visor 20, to thereby prevent an increase in the number of components.

As shown in Fig. 5, the sun visor 20 according to one embodiment of the present invention includes a first glass plate 21A, a second glass plate 21B, and a first interlayer 25A disposed between the first and second glass plates 21A and 21B. The first interlayer 25A includes a first light control film 23A that is switchable between light transmission and light scattering and a second light control film 23B whose visible light transmittance is adjustable, and the first and second light control films 23A and 23B may preferably be arranged in the thickness direction. That is, the sun visor 20 may preferably be a laminated glass structure in which two glass plates are joined via the interlayer 25A.

Here, it is preferable that the first and second light control films 23A and 23B be light control films having different characteristics from each other. It is preferable that the first light control film 23A be a light control film that is switchable between the light transmission mode and the light scattering mode. It is preferable that the second light control film 23B be a light control film whose visible light transmittance is adjustable and, more preferably, which is switchable between the light transmission mode and the light shielding mode. As described above, the first and second light control films 23A and 23B have different characteristics from each other and the modes of the first and second light control films 23A and 23B are combined as appropriate to shield light. As a result, it is possible to properly prevent the inflow of heat rays and to provide an appropriate heat shielding function. For example, setting the first light control film 23A to the light scattering mode as described below while setting the second light control film 23B to the light shielding mode sufficiently enhances the light shielding property and the heat shielding property. In addition, while the first light control film 23A is set to the light transmission mode, the second light control film 23B adjusts the transmittance of the visible light in accordance with the external condition to make is possible to enhance the light transmission property or suppress the light transmission property while providing a sense of openness or the like. As a result, it is possible to provide the sun visor 20 sufficiently matching the user's needs.

Hereinafter, description will be provided in detail of a case where the first light control film 23A is a light control film that is switchable between light transmission and light scattering and the second light control film 23B is the second light control film 23B whose visible light transmittance is adjustable.

### (First light control film)

As described above, the first light control film 23A is a light control body that is switchable between the light transmission mode and the light scattering mode. In the light transmission mode, the first light control film 23A has a high visible light transmittance. In the light scattering mode (sometimes referred to as light shielding mode for convenience), the first light control film 23A has a high haze value and a visible light transmittance lower than those in the light transmission mode. The first light control film 23A is switched between the light transmission mode and the light scattering mode in accordance with whether or not to apply voltage.

As the first light control film 23A, it is preferable to use a polymer dispersed liquid crystal (PDLC) film. Using the PDLC film makes it easy to increase the visible light transmittance in the light transmission mode, and makes it possible to obtain high light scattering in the light scattering mode and makes it easy to increase the haze value in the light scattering mode. As the first light control film 23A, a polymer network liquid crystal (PNLC) can also be used.

The first light control film 23A includes, for example, two substrate films and a light control layer disposed between the two substrate films. Examples of the substrate films include resin films using, as resin components, polyester resins such as polyethylene terephthalate and polyethylene naphthalate, acrylic resins, cellulose derivatives such as triacetyl cellulose (TAC), polyethersulfone (PES) resins, polyimide resins, or the like. Among them, from the viewpoint of ease of handling and the like, a polyester resin film is preferable and a polyethylene terephthalate film is more preferable above all.

Each of the two substrate films may preferably have an electrode layer on a surface facing the light control layer. As the electrode layers, any conventionally known electrode material having transparency may be used without limitation. Examples thereof include an indium tin oxide (ITO) conductive film, a tin oxide conductive film, a zinc oxide conductive film, and a polymer conductive film. The electrode layers may preferably be connected to an extraction electrode, through which voltage is applied between the electrode layers.

The light control layer in the first light control film 23A is, for example, a liquid crystal layer. In a case where the first light control film 23A is a polymer dispersed liquid crystal (PDLC) film, the liquid crystal layer is constituted by a polymer dispersed liquid crystal (PDLC). Examples of the polymer dispersed liquid crystal include a liquid crystal called network liquid crystal having network structure formed by polymers in the liquid crystal layer.

Examples of the liquid crystal layer include a liquid crystal layer in which a spacer, for example, forms a space for filling the liquid crystal inside and the liquid crystal is filled and sealed within the space, but the spacer may be eliminated. The liquid crystal may be any type, such as a TN type or an STN type. An orientation film may be provided between the light control layer and the electrode layer as appropriate. By providing the orientation film, the first light control film 23A can also be a reverse type described below.

In the first light control film 23A, when voltage is applied between the electrode layers, the orientation state in the liquid crystal layer changes to enable switching between the light transmission mode and the light scattering mode. The first light control film 23A may be any of a normal type or a reverse type. The normal type is a type that enters a transparent state when voltage is applied (voltage ON) and enters a scattering state when voltage is not applied (voltage OFF). The reverse type is a type that enters the transparent state when voltage is not applied and enters the scattering state when voltage is applied.

As described above, the first light control film 23A has a high visible light transmittance and a small haze value in the light transmission mode. The specific visible light transmittance of the first light control film in the light transmission mode is, for example, 60% or more, preferably 70% or more, and more preferably 75% or more. With the visible light transmittance as listed above, the light transmission property of the laminated glass structure can be sufficiently enhanced in the light transmission mode.

The haze value of the first light control film 23A in the light transmission mode is, for example, 30% or less, preferably 20% or less, and more preferably 10% or less.

The visible light transmittance of the first light control film 23A in the light transmission mode may be 100% or less and practically 99% or less, and the haze value thereof may be 0% or more and practically 1% or more, for example.

On the other hand, in the light scattering mode, the haze value of the first light control film 23A is, for example, 70% or more, preferably 80% or more, and more preferably 90% or more. In the light scattering mode, when the haze value increases as above, light shielding property is enhanced to make it possible to properly prevent the inflow of heat rays in the light scattering mode. It is also possible to prevent the interior from being looked in from the outside of the sun visor 20.

In the light scattering mode, the visible light transmittance of the first light control film 23A is lower than that in the light transmission mode, which is, for example, 40% or less, preferably 20% or less, and more preferably 10% or less. When the light transmittance is reduced in the light scattering mode as described above, it is possible to properly prevent the inflow of heat rays in the light scattering mode.

The haze value of the first light control film 23A in the light scattering mode may be 100% or less, and is practically about 99% or less. The visible light transmittance may be 0% or more, and is practically 1% or more.

Note that the first light control film 23A may be in either one of the light scattering mode or the light transmission mode with no voltage being applied, and the haze value and the visible light transmittance may be within the ranges described above in that mode. The first light control film 23A may enter the other one of the light scattering mode and the light transmission mode with voltage being applied, and the haze value and the visible light transmittance may be as described above in that mode. However, the voltage value applied is not limited, and the haze value and visible light transmittance described above may be obtained at any of the voltage values. The same is applied to the light transmission mode, the light shielding mode, and the like of the second light control film 23B described below.

The thickness of the first light control film 23A is not particularly limited, but is, for example, 0.05 mm or more and 2 mm or less, preferably 0.1 mm or more and 1 mm or less, and more preferably 0.2 mm or more and 0.8 mm or less.

As the first light control film 23A, a commercially-available product can be used. Specific examples thereof include "LC MAGIC" series manufactured by TOPPAN Inc. of a normal type [light transmission mode: haze value 5%; parallel transmittance 82%, light scattering mode: haze value 98%; parallel transmittance 1% (catalog values)] and a reverse type [light transmission mode: haze value 10%; parallel transmittance 80%, light scattering mode: haze value 92%; parallel transmittance 7% (catalog values)]. Additional examples thereof include "UMU" manufactured by NSG UMU PRODUCTS CO., LTD. of a window type [light transmission mode: haze value 6%, parallel transmittance 74%, light scattering mode: haze value 86%, parallel transmittance 5% (catalog values)]. Another example thereof is "LC-W" of Gauzy Ltd.

### (Second light control film)

The second light control film 23B is a light control body whose visible light transmittance is adjustable. The second light control film 23B may preferably be switchable between the light transmission mode in which the visible light transmittance is high and the light shielding mode in which the visible light transmittance is reduced.

In the second light control film 23B, light scattering does not occur so much even in the light shielding mode, resulting in the haze value not so high, which is lower than that of the first light control film in the light scattering mode described above.

Examples of the second light control film 23B include an electrochromic film, an SPD film, and an electrophoretic film device, and the SPD film is preferable among them. Use of these films causes light scattering not so much and makes it possible to reduce the visible light transmittance. Therefore, by setting the first light control film 23A to the light transmission mode while setting the second light control film 23B to the light shielding mode, it is possible to suppress light scattering while suppressing the light transmittance so as not to shield light completely. Accordingly, when these films are used for the sun visor, the outside can be visually seen through the sun visor, thus preventing transmission of heat rays to a certain degree and making it easier to provide a sense of openness.

The second light control film 23B includes, for example, two substrate films and a light control layer disposed between the two substrate films. Examples of the substrate film include a resin film, and the resin used for the resin film is as described for the first light control film 23A. However, from the viewpoint of ease of handling and the like, a polyester resin film is preferable and a polyethylene terephthalate film is more preferable among them. Therefore, it is preferable that the substrate films of the first and second light control films 23A and 23B be both polyester resin films, and it is more preferable that the substrate films be both polyethylene terephthalate films.

Also in the second light control film 23B, each of the two substrate films may preferably have an electrode layer on a surface facing the light control layer. As the electrode layers, any conventionally known electrode material having transparency may be used. Examples thereof include an indium tin oxide (ITO) conductive film, a tin oxide conductive film, a zinc oxide conductive film, and a polymer conductive film. The electrode layers may preferably be connected to an extraction electrode, through which voltage is applied between the electrode layers.

### <<SPD film>>

In a case where the second light control film 23B is a suspended particle device (SPD) film, the light control layer is a layer containing a resin matrix and a light control suspension dispersed in the resin matrix.

The resin matrix contains a polymer medium, and the light control suspension contains light control particles dispersed in a disperse medium in a flowable state. As the polymer medium and the disperse medium (disperse medium in the light control suspension), used are those allowing the polymer medium, a cured product thereof, and the disperse medium to be phase-separated from each other at least when being made into a film. It is preferable to use the polymer medium and the disperse medium that are incompatible or partially compatible with each other in combination.

Examples of the polymer medium include a polymer medium that includes a resin having a substituent with ethylenically unsaturated bonds and a photopolymerization initiator, and that is cured by irradiation with energy rays such as ultraviolet rays, visible light rays, and electron rays. As the resin with ethylenically unsaturated bonds, silicon resins, acrylic resins, polyester resins, and the like are preferable.

In addition to the resin having a substituent with ethylenically unsaturated bonds described above, it is possible to simultaneously use, as constituent materials of the polymer medium, an organic solvent-soluble resin or a thermoplastic resin, such as polyacrylic acid and polymethacrylic acid.

Furthermore, additives such as a coloring inhibitor, for example, dibutyltin dilaurate or the like, may be added into the polymer medium as needed. In addition, the polymer medium may contain a solvent.

As the disperse medium in the light control suspension, it is preferable to use a liquid copolymer that plays a role as a disperse medium in the light control suspension, selectively adheres to and coats the light control particles, acts to move the light control particles into a phase-separated droplet phase at the phase separation from the polymer medium, is not electrically conductive, and is not compatible with the polymer medium.

As the liquid copolymer, for example, a (meth)acrylic ester oligomer having a fluoro group and/or a hydroxyl group is preferable, and a (meth)acrylic ester oligomer having a fluoro group and a hydroxyl group are more preferable.

The light control suspension used in this embodiment contains light control particles flowably dispersed in the disperse medium. As the light control particles, for example, crystals of polyiodides are used, and needle-like small crystals of polyiodides are preferably used.

In the SPD film, the light control particles may preferably be oriented in the thickness direction when voltage is applied between both electrode layers to thereby increase a light transmittance, for example, a transmittance in a specific wavelength region.

Furthermore, in the SPD film, a primer layer may be provided between the light control layer and the electrode layer as appropriate.

When voltage is not applied between the electrode layers (voltage OFF), the SPD film has a poor light transmission property and enters the light shielding mode. On the other hand, when voltage is applied between the electrode layers (voltage ON), the transmittance in, for example, a specific wavelength region increases to thereby switch the light shielding mode to the light transmission mode. Together with changes in visible light transmittance, the SPD film may also undergo changes in color tone when being irradiated with visible light. For example, it is also possible to make the SPD film colorless and transparent when voltage is applied, while applying a color tone such as blue when voltage is not applied. In the SPD film, when the magnitude of the voltage value applied between the electrodes is changed, the magnitude of the visible light transmittance in the light transmission mode also changes.

### <<Electrochromic film>>

In a case where the second light control film 23B is an electrochromic film, the light control layer may preferably contain an electrochromic material. The electrochromic material is not limited as long as being a compound having electrochromicity, and may be any of inorganic compounds, organic compounds, or mixed-valence complexes.

Examples of the inorganic compounds include Mo₂O₃, Ir₂O₃, NiO, V₂O₅, WO₃, and TiO₂, and WO₃ is preferable among them. Examples of the organic compounds include polypyrrole compounds, polythiophene compounds, polyparaphenylenevinylene compounds, polyaniline compounds, polyacetylene compounds, polyethylenedioxythiophene compounds, metallophthalocyanine compounds, viologen compounds, viologen salt compounds, ferrocene compounds, dimethyl terephthalate compounds, and diethyl terephthalate compounds, and polyacetylene compounds are preferable among them. Examples of the mixed-valence complexes include Prussian blue complexes (KFe[Fe(CN)₆] and the like).

In the electrochromic film, when voltage is applied between the electrode layers, the transmittance in, for example, a specific wavelength region changes. As a result, the light control body transitions from a state of high visible light transmittance (light transmission mode) to a state of low visible light transmittance (light shielding mode). In addition, the electrochromic film may also undergo changes in color tone when being irradiated with visible light. For example, it is possible to make the electrochromic film colorless and transparent when voltage is not applied, while applying a color tone such as blue, yellow, green, or red when voltage is applied.

### <<Electrophoretic film device>>

The electrophoretic film device has, for example, an electrophoretic portion between two material substrates having an electrode layer. The electrophoretic portion includes, for example, electrophoretic particles and a dispersant that disperses the electrophoretic particles. Also in the electrophoretic film device, changing whether or not to apply voltage between the electrode layers enables a change between the state of high visible light transmittance (light transmission mode) and the state of low visible light transmittance (light shielding mode). Specific examples of the electrophoretic film device are described in detail in US 2016/0124284 A and the like.

In the second light control film 23B in the light transmission mode, the visible light transmittance is a certain value or more, and the haze value is reduced. The specific visible light transmittance of the second light control film in the light transmission mode is, for example, 25% or more, preferably 30% or more, and more preferably 40% or more. With the visible light transmittance as listed above, both the first and second light control films 23A and 23B can be set to the light transmittance mode, to thereby enhance the light transmission property of the sun visor 20 to make it possible to observe the outside with high visibility even with the sun visor 20 hanging down.

The haze value of the second light control film 23B in the light transmission mode is, for example, 30% or less, preferably 20% or less, and even more preferably 10% or less. The visible light transmittance of the second light control film 23B in the light transmission mode may be 100% or less and practically 70% or less, and the haze value thereof may be 0% or more and practically 1% or more.

On the other hand, in the light shielding mode, the haze value of the second light control film 23B is, for example, less than 60%, preferably less than 50%, and more preferably less than 40%. If the haze value can be reduced as above in the light shielding mode, the straightness of transmitted light can be secured while improving the light shielding property. For example, setting the first light control film 23A to the light transmission mode while setting the second light control film 23B to the light shielding mode properly prevents the inflow of heat rays while ensuring a certain degree of sense of openness. On the other hand, the haze value of the second light control film 23B in the light shielding mode is not particularly limited, but generally higher than the haze value of the second light control film 23B in the light transmission mode.

In the light shielding mode, the visible light transmittance of the second light control film 23B is lower than that in the light transmission mode, which is, for example, less than 25%, preferably 20% or less, and more preferably 10% or less. When the light transmittance is reduced in the light shielding mode as listed above, it is possible to properly prevent the inflow of heat rays in the light shielding mode.

It is more preferable that the visible light transmittance of the second light control film 23B in the light shielding mode be 5% or less, from the viewpoint of avoiding the glare of sunlight during the daytime and ensuring a sense of openness to the outside by setting the second light control film 23B to the light shielding mode while setting the first light control film 23A to the light transmission mode.

The visible light transmittance of the second light control film 23B in the light shielding mode is not particularly limited, but may be, for example, 0.5 % or more, or 1% or more.

The thickness of the second light control film 23B is not particularly limited, but is, for example, 0.05 mm or more and 2 mm or less, preferably 0.1 mm or more and 1 mm or less, and more preferably 0.2 mm or more and 0.8 mm or less.

As the second light control film 23B, a commercially-available product can be used. Specific examples as the SPD film include "LCF-1103DHA" series manufactured by Hitachi Chemical Company, Ltd. of a light type [light transmission mode: visible light transmittance 45 to 65% (50 to 100 V); haze value 6%, light shielding mode: visible light transmittance 3% (catalog values)] and a dark type [light transmission mode: visible light transmittance 30 to 53% (50 to 100V); haze value 6%, light shielding mode: visible light transmittance 1% (catalog values)].

Another example as the SPD film is "SPD" of Gauzy Ltd. Other examples thereof are an electrochromic film of Ynvisible Interactive Inc., "E-Skin" of Signify Holding. as an electrophoretic film device, and the like.

In the sun visor 20 that is caused to droop and covers the windshield, it is preferable that the second light control film 23B be disposed nearer the vehicle outside than the first light control film 23A. When the second light control film 23B is disposed nearer the vehicle outside, outside light such as sunlight entering the vehicle inside from the vehicle outside is shielded by the second light control film 23B, and the amount of outside light irradiating the PDLC film or the like constituting the first light control film 23A is reduced. This makes the durability of the first light control film 23A such as the PDLC film having low light resistance favorable and also enhances the durability of the sun visor.

### (Glass plate)

The glass plates 21A and 21B may be either of inorganic glass or organic glass. The inorganic glass is not particularly limited, and examples thereof include clear glass, clear float glass, float plate glass, tempered glass, colored glass, polished plate glass, figured glass, figured and wired glass, wire plate glass, UV absorbing plate glass, infrared reflecting plate glass, infrared absorbing plate glass, and green glass.

As the organic glass, glass commonly called resin glass is used. The organic glass is not particularly limited, and examples thereof include organic glass constituted by a polycarbonate plate, a polymethylmethacrylate plate, a polyester plate, or the like.

The two glass plates 21A and 21B may be made of materials which are similar in type to each other or may be made of different materials. For example, one of the glass plates 21A and 21B may be inorganic glass and the other may be organic glass, but it is preferable that both of the two glass plates 21A and 21B be inorganic glass or organic glass.

The thickness of each of the glass plates 21A and 21B is not particularly limited, but preferably 0.5 mm or more and 3.2 mm or less, more preferably 0.7 mm or more and 2.7 mm or less, and even more preferably 1.0 mm or more and 2.6 mm or less. By setting the thickness within the above range, it is possible to make the overall thickness of the laminated glass structure a certain thickness or less while providing a certain degree of mechanical strength to the sun visor 20.

It is preferable that the sun visor 20 according to one embodiment of the present invention have a thickness of 7 mm or less. The thickness of the sun visor 20 according to one embodiment of the present invention is not particularly limited in terms of the lower limit value, but is 4 mm or more, for example, and preferably 5 mm or more.

### (Resin layer)

As shown in Fig. 5, it is preferable that the glass plates 21A and 21B and the light control films 23A and 23, and the light control films 23A and 23B be joined through the resin layers 22A to 22C. In Fig. 5, the resin layers 22A to 22C and the light control films 23A and 23B are drawn simplified. However, actually, the resin layers 22A to 22C may preferably be integrated to embed therein the light control films 23A and 23B and the semiconductor drive boards 24A and 24B, which are disposed therebetween, to form the interlayer 25A.

Furthermore, gaps are sometimes generated in the outer circumferences of the light control films 23A and 23B and the semiconductor drive boards 24A and 24B when being embedded in the resin layers 22A to 22C. To eliminate such gaps, sealing resin layers (not shown) may be further provided outside the light control films 23A and 23B and the semiconductor drive boards 24A and 24B. The sealing resin layer may preferably be constituted by the same resin as the resin constituting the resin layers 22A to 22C.

As resins used for the resin layers 22A to 22C, thermoplastic resins are preferable. In addition, it is preferable that each of the resin layers 22A to 22C have an excellent light transmission property. For example, resins having a visible light transmittance of 90% or more may be used.

The thermoplastic resins used for the resin layers 22A to 22C are not particularly limited, and examples thereof include polyvinyl acetal resins, ethylene-vinyl acetate copolymer resins, ionomer resins, polyurethane resins, thermoplastic elastomers, acrylic resins, acrylic-vinyl acetate copolymer resins, polyvinyl alcohol resins, polyolefin resins, polyvinyl acetate resins, and polystyrene resins. Using these resins makes it easier to ensure adhesiveness to the glass plates 21A and 21B. In the resin layers 22A to 22C, one kind of the thermoplastic resins may be used alone, or two or more kinds thereof may be used in combination. Among them, the polyvinyl acetal resins are particularly suitable because of excellent adhesiveness to inorganic glass exhibited when a plasticizer is contained in the resin layers.

Furthermore, the resin layers 22A to 22C are not limited to thermoplastic resins, and thermosetting resins such as urethane resins and rubber materials such as silicone rubber and urethane rubber may also be used. In a case where a rubber material is used, it is preferable that the resin layer and the glass plate, and the resin layer and the light control film, be adhered to each other by a separately applied adhesive.

In a case where the resin layers 22A to 22C contain a thermoplastic resin, the resin layers 22A to 22C may further contain a plasticizer. Making the resin layers 22A to 22C contain a plasticizer results in the interlayer 25A having flexibility. Furthermore, it becomes also possible to increase adhesiveness to the glass plates 21A and 21B especially when the glass plates 21A and 21B are inorganic glass. In a case where a polyvinyl acetal resin is used as the thermoplastic resin, containing the plasticizer in the layer of the resin is particularly effective.

Examples of the plasticizers include organic ester plasticizers such as monobasic organic acid esters and polybasic organic acid esters, and phosphate plasticizers such as organic phosphate plasticizers and organic phosphite plasticizers. Among them, organic ester plasticizers are preferable, and especially suitable is triethylene glycol-di-2-ethylhexanoate (3GO).

The content of the plasticizer in each of the resin layers 22A to 22C is not particularly limited, but is, for example, 20 to 100 parts by mass, and preferably 30 to 70 parts by mass relative to 100 parts by mass of the thermoplastic resin. In a case where each of the resin layers contains a thermoplastic resin, the thermoplastic resin, or the thermoplastic resin and plasticizer is/are a main component/main components. The total amount of the thermoplastic resin and the plasticizer is usually 70% by mass or more, preferably 80% by mass or more, and more preferably 90% by mass or more based on the total amount of the resin layers.

The thickness of the interlayer 25A is not particularly limited, but is, for example, 0.1 to 2 mm, preferably 0.2 to 2 mm, and more preferably 0.3 to 1 mm.

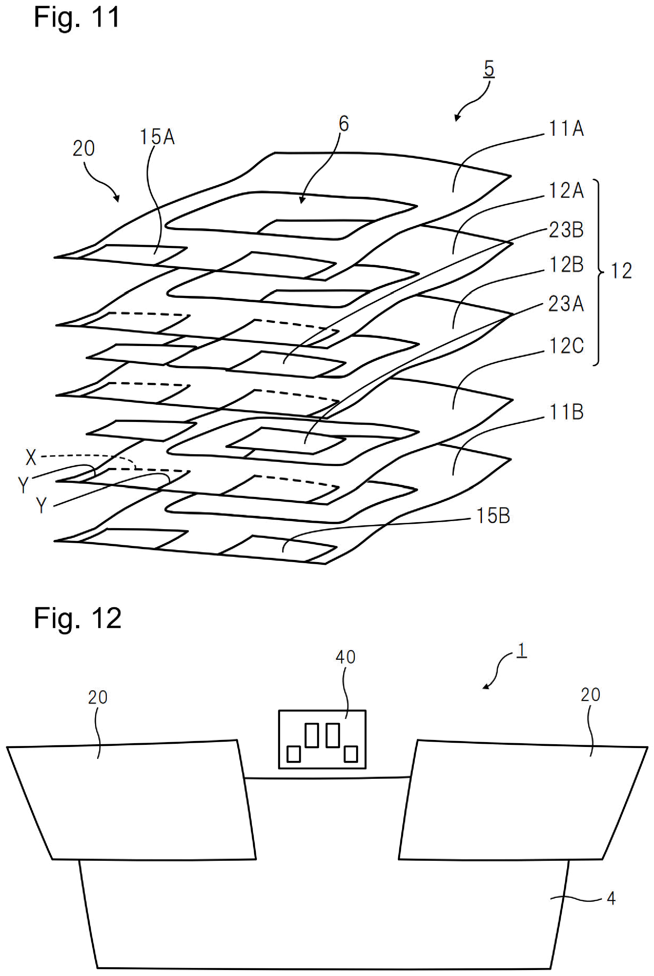

With reference to the drawings, a sun visor according to another embodiment of the present invention is described. As shown in Fig. 11, the vehicle 1 having the sun visor 20 according to another embodiment of the present invention is provided with a laminated glass structure 5 as a part of the roof part. The laminated glass structure 5 may preferably be attached to the vehicle top panel by being embedded in the vehicle top panel or otherwise. The sun visor 20 is integrated and attached to the laminated glass structure 5 constituting the roof part 10.

Fig. 11 shows an exploded view of the laminated glass structure 5. As shown in Fig. 11, the laminated glass structure 5 includes a first glass plate 11A, a second glass plate 11B, and an interlayer 12 disposed between the first and second glass plates 11A and 11B, the interlayer 12 joining the first glass plate 11A and the second glass plate 11B. The interlayer 12 includes resin layers 12A to 12C.

As the glass plates 11A and 11B and the resin layers 12A to 12C, the same glass plates and resin layers as described above can be used. The light control films 23A and 23B may preferably be structured to be embedded in the integrated resin layers 12A to 12C.

In the present embodiment, each of the glass plates 11A and 11B is structured so that a portion where the sun visor 20 is provided (hereinafter, also referred to as sun visor portion) is separated as sun visor glass pieces 15A and 15B from a portion constituting the roof part 10. On the other hand, the resin layers 12A to 12C are structured so that the sun visor portion and the roof part are partially separated from each other as shown by separated portions Y (indicated by a solid line in Fig. 11), but are partially not cut off from each other and connected through a connected portion X (indicated by a dotted line in Fig. 11). Note that the connected portion X constitutes a rear end portion of the sun visor 20. The light control films 23A and 23B are disposed at positions corresponding to the sun visor glass pieces 15A and 15B.

With the above configuration, the sun visor 20 is constituted by the sun visor glass pieces 15A and 15B, the resin layers 12A to 12C, and the light control films 23A and 23B, and is structured to be attached to the roof part through the connected portion X. In the sun visor 20, the light control films 23A and 23B may preferably be disposed to be embedded in the interlayer 12 as described above. Although not shown, the sun visor 20 may be provided with a semiconductor drive board or the like embedded in the interlayer.

Resins (especially polyvinyl acetal resins) used for the resin layers 12A to 12C of the laminated glass structure generally have high adhesive strength. Therefore, by being attached to the roof part through the connected portion X constituting the resin layers 12A to 12C, the sun visor 20 is attached to the roof part with a high holding force. Accordingly, the sun visor 20 has light control films and weight thereof becomes relatively large. However, even when the weight is large, the sun visor 20 can be securely held by the roof part through the connected portion X.

The sun visor 20 may preferably be structured to allow rotation about the connected portion X. Such structure allows the sun visor 20 when not in use to be fitted into the laminated glass structure 5 and to be rotated to hang down when in use.

However, the sun visor 30 may be further attached to the vehicle top panel (not shown) or the like, through a hinge (not shown) or the like, and may be structured to rotate about the hinge.

An opening 6 may be provided in a portion of the laminated glass structure 5 constituting the roof part. By providing the opening 6, the vehicle top panel can be structured as a sunroof or the like. The opening 6 may preferably be covered by an openable lid or a window glass provided in the vehicle top panel.

The sun visor according to this embodiment shows a form of being incorporated into the roof part, and is integrated with the roof part in a flipped-up state, thus enabling a configuration with high aesthetic quality.

### (Modification 1)

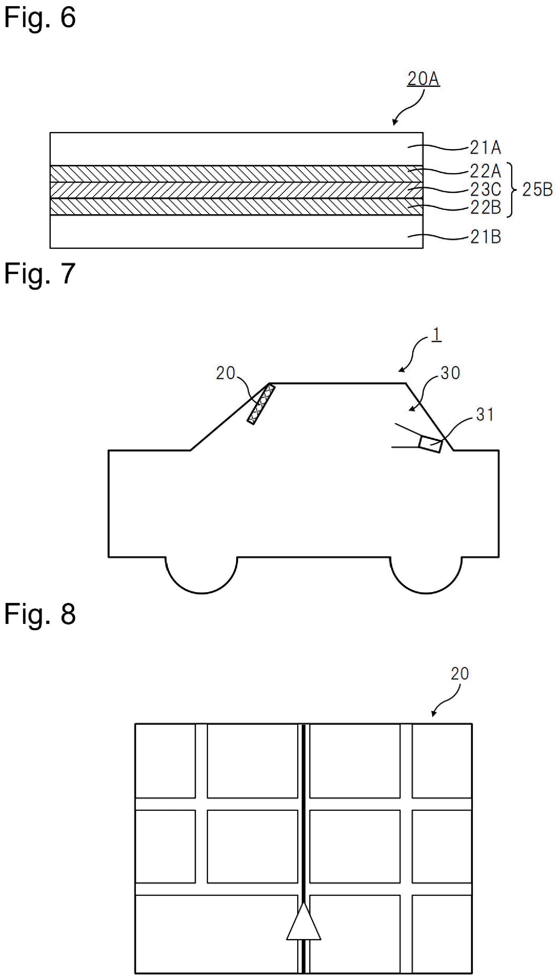

The interlayer 25A of the sun visor 20 according to one embodiment of the present invention includes two light control films 23A and 23B. However, as long as the sun visor of the present invention includes a first glass plate, a second glass plate, and a first interlayer disposed between the first and second glass plates and the first interlayer includes a light control film, the number of light control films provided in the interlayer of the sun visor of the present invention is not limited to two. For example, as in a sun visor 20A shown in Fig. 6, the interlayer 25B may have a single light control film 23C. In such a case, the interlayer 25B may preferably be constituted by a first resin layer 22A and a second resin layer 22B, which are disposed to sandwich a light control film 23C. The light control film 23C may be a light control film that is switchable between light transmission and light scattering, such as a PDLC film, or a film whose visible light transmission is adjustable, such as an electrochromic film, an SPD film, and an electrophoretic film device. However, either of the PDLC film or the SPD film is preferable, and the PDLC film is more preferable among them.

Although not shown, the interlayer may include three or more light control films. Also in such cases, it becomes easier for the sun visor to include the light control films.

### (Modification 2)

The sun visor 20 according to one embodiment of the present invention includes the semiconductor drive boards 24A and 24B for driving the light control films 23A and 23B, respectively. However, the sun visor of the present invention may not include the semiconductor drive board.

### (Modification 3)

The sun visor according to one embodiment of the present invention can be further additionally provided with a light guiding member, a light guiding film, a diffusion film, or the like to provide an illumination portion capable of emitting light. The illumination portion can serve as lighting or illumination that emits light toward the vehicle inside.

### (Modification 4)

The sun visor according to one embodiment of the present invention is a sun visor that is provided in the roof part of the vehicle and can hang down. However, the sun visor of the present invention is not particularly limited as long as being a sun visor for a vehicle and including a light control film. For example, the sun visor of the present invention may be a sun visor provided directly in the windshield.

The sun visor 20 according to one embodiment of the present invention and the sun visor according to another embodiment of the present invention are merely examples of the sun visor of the present invention. The sun visor of the present invention is not limited to the sun visor 20 according to one embodiment of the present invention and the sun visor according to another embodiment of the present invention.

### [Information display device]

With Reference to the drawings, an information display device according to one embodiment of the present invention is described. As shown in Fig. 7, an information display device 30 according to one embodiment of the present invention includes the sun visor 20 according to one embodiment of the present invention and a light source 31 that irradiates the sun visor 20 hanging down with light. As a result, the sun visor 20 can be used as a display for displaying information to allow an occupant to visually recognize a variety of information with the forward line of sight being maintained. Furthermore, the information displayed on the sun visor 20 can also provide space effects in the vehicle.

### (Light source)

The light source 31 is provided inside the vehicle. As shown in Fig. 7, for example, the light source 31 may be provided on the rear side relative to the back seat. Although not shown, the light source 31 may be provided inside the dashboard, above the dashboard, in the roof part, or between the front seat and the back seat. As the light source 31, it is possible to use, for example, a projector capable of projecting various images, which may be a full-color (RGB) projector or a projector that emits monochromatic light, such as an LED projector. The light source 31 may also be an ultra-short-throw (UST) projector or the like. A video display system or the like using a digital mirror device, which is known as a so-called DLP (registered trademark) projector, may also be used.

In a case of causing the sun visor 20 to perform display without changing projected images, such as displaying fixed icons, fixed messages, or the like, use of the projector is not required, and a light source that irradiates the laminated glass with certain light according to the images may be used.

As the information displayed on the sun visor 20, an image corresponding to the light from the light source 31 may preferably be displayed. For example, if the light from the light source 31 is monochromatic light, a monochromatic image is displayed on the sun visor 20. If the light from light source 31 is in full color, a full color image is displayed on the sun visor 20.

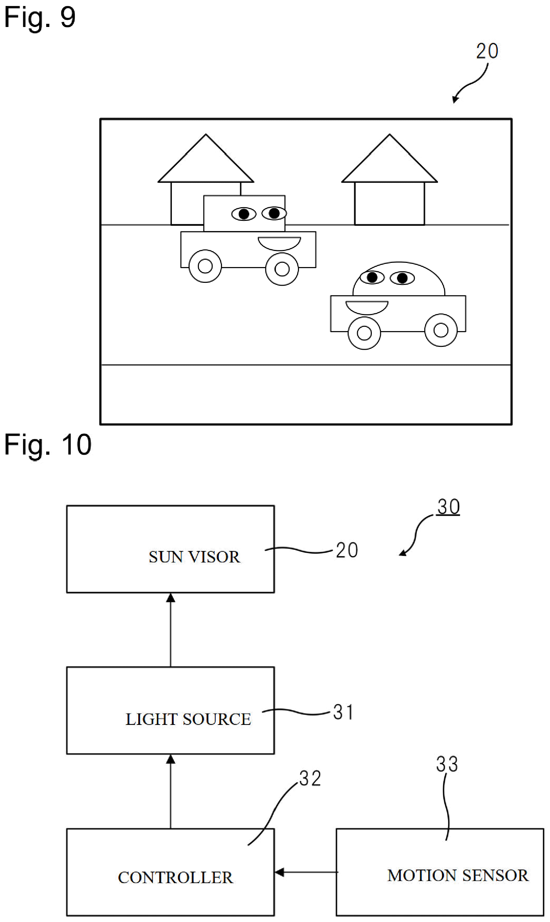

The information displayed on the sun visor 20 is not particularly limited. For example, as shown in Fig. 8, a map image in which the current location of the vehicle is displayed on a map of the surrounding area of the vehicle may be displayed on the sun visor 20 to constitute a navigation system. Furthermore, as shown in Fig. 9, entertainment information such as movies, music, animated cartoons, games, cartoons, characters, and the like may be displayed on the sun visor 20.

When information is displayed on the sun visor 20, the light control film may be in the light transmission mode or the light shielding mode. However, it is preferable that at least one light control film be in the light shielding mode. In a case where the sun visor 20 includes a plurality of light control films, it is preferable that all the light control films be in the light shielding mode.

By setting the light control film into the light shielding mode, the sun visor becomes generally opaque and therefore can properly display information from the light source 31.

Fig. 10 is a block diagram showing a control system of the information display device 30 according to one embodiment of the present invention. As shown in Fig. 10, the information display device 30 may preferably include a controller 32 and a motion sensor 33 in addition to the sun visor 20 and the light source 31. The controller 32 controls the entire information display device 30 and is constituted by a CPU or the like provided in an automobile, but is not limited thereto.

The controller 32 controls the operation of the light source 31 according to ON and OFF of the light source 31 and information to be displayed on the sun visor 20. The controller 32 may also collectively control the operation of the entire vehicle. The controller 32 may also switch the light transmission mode and the light shielding mode of the light control film of the sun visor 20.

The motion sensor 33 is a sensor that detects the motion of touching the sun visor 20 using a camera, an IR sensor, an ultrasonic sensor, or the like, and can detect the touching motion without providing a conductive layer or the like in the sun visor 20. The motion sensor 33 may be a sensor that detects motion other than touch input, or may be a sensor that can detect approach of a person to the sun visor 20. A touch sensor may also be used instead of a motion sensor. Also in such a case, touching motion to the sun visor 20 can be detected. Examples of types of the touch sensor include a capacitive type and a resistive film type. The motion sensor and the touch sensor may be used in combination.

When the motion sensor or the touch sensor detects the touch input or detects specific motion other than the touch input, switching between the light transmission mode and the light shielding mode of the light control film may be performed. Furthermore, when specific motion is detected, the information display in the sun visor 20 may be turned on or off, or the information display may be switched. Furthermore, in response to other switch inputs than those through the motion sensor, the touch sensor, and the like, switching between the light transmission mode and the light shielding mode of the light control film may be performed, the information display on the sun visor 20 may be turned on or off, or the information display may be switched.

In a case where the sun visor 20 is used as a motion sensor or a touch sensor, a mode is also preferable in which images (operation input images) such as switches, buttons, a keyboard, and a numeric keypad are displayed on the sun visor 20 to assist operation input. The operation input images being displayed allow the user to know that the sun visor 20 can be used to input operation, leading to enhancement in usability.

In a case where the operation input images are displayed, by the sensor input, switching of the modes of the light control film, switching between ON and OFF of the information display in the sun visor 20, or switching of the information display may be performed as described above. However, switching of any operation other than the above of the vehicle may also be performed. For example, opening and closing operations of doors, switching of wiper operation, switching between display and non-display by direction indicators may be performed.

The information display device 30 according to one embodiment of the present invention is merely one example of the information display device of the present invention. The information display device of the present invention is not limited to the information display device 30 according to one embodiment of the present invention.

### [Vehicle]

As shown in Fig. 1, the vehicle 1 according to one embodiment of the present invention includes the sun visor 20 according to one embodiment of the present invention or the sun visor according to another embodiment of the present invention. Since the sun visor 20 according to one embodiment of the present invention or the sun visor according to another embodiment of the present invention has already been described, the description is omitted as to the sun visor 20 according to one embodiment of the present invention or the sun visor according to another embodiment of the present invention.

The vehicle according to one embodiment of the present invention includes the roof part having the laminated glass structure. Since the laminated glass structure has already been described, the description of the laminated glass structure is omitted.

### (Modification 1)

As shown in Fig. 12, the vehicle 1 according to one embodiment of the present invention may include an overhead console 40 above the windshield 4 and between a pair of sun visors 20. In the overhead console 40, for example, switches such as an air conditioner switch, a hazard lamp switch, and a windshield defogging start switch may be disposed. In addition, switches for operating the sun visor 20 may also be disposed therein.

### (Modification 2)

The vehicle according to one embodiment of the present invention shown in Fig. 1 is an automobile, but the vehicle of the present invention is not limited to the automobile. Examples of the vehicle of the present invention other than the automobile include: railway vehicles such as an electric train, a steam train, and a train; earthmoving heavy machines such as a forklift and an excavator; a cart; and an amusement park vehicle.

The vehicle 1 according to one embodiment of the present invention is merely one example of the vehicle of the present invention. The vehicle of the present invention is not limited to the vehicle according to one embodiment of the present invention.

### Reference Signs List

- 1: vehicle
- 2: guide
- 3: hinge
- 4: windshield
- 5: laminated glass structure
- 6: opening
- 10: roof part
- 11A, 11B, 21A, 21B: glass plate
- 12, 25A, 25B: interlayer
- 12A, 12B, 12C, 22A, 22B, 22C: resin layer
- 15A, 15B: sun visor glass piece
- 20, 20A: sun visor
- 23A, 23B, 23C: light control film
- 24A, 24B: semiconductor drive board
- 30: information display device
- 31: light source
- 32: controller
- 33: motion sensor
- 40: overhead console

## Claims

1. A sun visor for a vehicle, the sun visor comprising a light control film.

2. The sun visor according to claim 1, comprising:
a first glass plate,
a second glass plate, and
an interlayer disposed between the first glass plate and the second glass plate, wherein
the interlayer comprises the light control film.

3. The sun visor according to claim 1 or 2, wherein
the light control film comprises
a first light control film that is switchable between a light transmission mode and a light scattering mode and
a second light control film whose visible light transmittance is adjustable, and
the first light control film and the second light control film are arranged in a thickness direction.

4. The sun visor according to claim 3, wherein
in the light transmission mode, the first light control film has a visible light transmittance of 60% or more and 100% or less and a haze value of 0% or more and 30% or less.

5. The sun visor according to claim 3, wherein
in the light scattering mode, the first light control film has a visible light transmittance of 0% or more and 40% or less and a haze value of 70% or more and 100% or less.

6. The sun visor according to claim 3, wherein
the second light control film is switchable between the light transmission mode and a light shielding mode, and,
in the light transmission mode, the second light control film has a visible light transmittance of 25% or more and 100% or less and a haze value of 0% or more and 30% or less.

7. The sun visor according to claim 3, wherein
the second light control film is switchable between the light transmission mode and a light shielding mode, and,
in the light shielding mode, the second light control film has a visible light transmittance of 0.5% or more and less than 25% and a haze value of less than 60%.

8. The sun visor according to claim 1 or 2, wherein the sun visor is provided in a roof part of the vehicle and is capable of hanging down.

9. An information display device comprising the sun visor according to claim 8 and a light source that irradiates the sun visor hanging down with light.

10. A vehicle comprising the sun visor according to claim 1 or 2.

11. The vehicle according to claim 10, comprising a roof part having a laminated glass structure, wherein
the laminated glass structure includes a first glass plate, a second glass plate, and an interlayer disposed between the first glass plate and the second glass plate, and
the sun visor is attached to the laminated glass structure.
